# EUROPEAN PATENT APPLICATION

(11) **EP 0 943 531 A2**
(43) Date of publication of application: **22.09.1999**
(21) Application number: 99102506.5
(22) Date of filing: 10.02.1999
(51) Int. Cl.: B62D 25/20

(54) **Car body structure**

(30) Priority: 18.03.1998 DE 19811781
(71) Applicant: DaimlerChrysler AG, 70567 Stuttgart (DE)
(72) Inventor: Eipper, Konrad, 72108 Rottenburg (DE); Heiss, Werner, 71063 Sindelfingen (DE)

(57) **Zusammenfassung**

Karosseriestruktur für ein Kraftfahrzeug mit mehreren fest zusammengefügten, kraftübertragenden Bauteilen (1-8), von denen wenigstens eines mehrschalig ausgeführt ist.

Erfindungsgemäß ist wenigstens eine Teilschale des mehrschaligen Bauteiles aus gelochtem Blechmaterial gestaltet.

## Description

Die Erfindung betrifft eine Karosseriestruktur für ein Kraftfahrzeug mit mehreren fest zusammengefügten, kraftübertragenden Bauteilen, von denen wenigstens eines mehrschalig ausgeführt ist.

Aus dem deutschen Gebrauchsmuster DE-GM 1 990 687 ist ein Karosserietragteil, insbesondere ein Längsträger bekannt, der aus zwei offenen Hohlprofilschalen aus Stahlblech besteht. Die beiden Blechprofile weisen auf einer gemeinsamen Seite hutzenartige Be- und Entlüftungsöffnungen in Form von seitlich offenen Ausprägungen des Bleches auf, durch die Feuchtigkeit aus dem Inneren des Längsträgers nach außen gelangen kann.

Aus der Patentschrift DE 34 01 039 C2 ist eine Stirnwand eines Kraftfahrzeuginsassenraumes bekannt, die einen aus einem siebartig gelochten Blech hergestellten Teilbereich aufweist. Dieser siebartig gelochte Teilbereich dient als Luftdurchtrittsöffnung, durch die von einem außenseitig angeordneten Gebläse klimatisierte Luft in den Kraftfahrzeuginsassenraum gefördert werden kann.

Ferner ist der Patentschrift DE 44 37 773 C1 ein Verstärkungsblech für eine Instrumententafel in einem Kraftfahrzeug zu entnehmen. Das Verstärkungsblech weist eine durchgängige siebartige Lochung auf und ist mit der Instrumententafel derart verpreßt, daß das Material der Instrumententafel in die Löcher gedrückt wird. Dadurch wird eine verbesserte, formschlüssige Verbindung zwischen den beiden Bauteilen erzielt.

Aus der Offenlegungsschrift DE 197 32 308 A1 sind ein Trägerblech für ein Karosserieteil und ein Karosserieteil bekannt, die jeweils aus mehreren Blechsegmenten zusammengesetzt sind, wobei wenigstens ein Segment aus einem mittels Stanzen hergestellte Perforationen aufweisenden Lochblech und ein anderes Segment aus einem ungelochten Blech besteht. Die Löcher des Lochblechsegmentes sind in einer regelmäßigen Gitterstruktur angeordnet und weisen einen Durchmesser vom 2,5- bis 6-fachen der Blechdicke auf.

Aus der Offenlegungsschrift DE 197 18 786 A1 sind ein mehrschaliges, aus Blechteilen zusammengesetztes Karosseriesegment für ein Kraftfahrzeug und ein Verfahren zu seiner Herstellung bekannt. Das Karosserieteil besteht aus einem Innenschalenteil und einem Außenschalenteil, wobei wenigstens ein Schalenteil, vorzugsweise das Innenschalenteil eine Versickung mit einem wellenartigen Querschnittsprofil aufweist. In den Wellenbergen der Versickung ist eine regelmäßige Lochanordnung vorgesehen, die aus Schlitzen und zwischen den Schlitzen liegenden Löchern besteht. Die Schlitze sind derart angeordnet, daß sie quer zur Orientierung der Wellenberge verlaufen, und dienen insbesondere zur Flexibilisierung dieses Schalenteils, so daß es in eine sphärische Raumform umformbar ist. Dachteile, Seitenteile, Schweller, Querträger oder Mitteltunnelteile sind als derartiges Karosseriesegment ausführbar.

Aufgabe der Erfindung ist es, eine Karosseriestruktur der eingangs genannten Art zu schaffen, die gegenüber bekannten Strukturen eine Gewichtsreduzierung und ein verbessertes Verformungsverhalten im Fall einer Kollision des Kraftfahrzeuges aufweist.

Diese Aufgabe wird dadurch gelöst, daß wenigstens eine Teilschale des mehrschaligen Bauteiles aus einem siebartig gestalteten Blech geformt ist, das Löcher mit einer Erstreckung von etwa einer Blechdicke aufweist.

Mehrschalige Bauteile weisen häufig Teilschalen auf, die im wesentlichen lediglich eine Verstärkungs- bzw. Versteifungsfunktion erfüllen, und an deren Oberflächenbeschaffenheit keine erhöhten Anforderungen gestellt werden. Derartige Teilschalen lassen sich somit aus einem gelochten, d.h. mit Durchbrüchen versehenen Blechmaterial in Form eines siebartig gestalteten Blechs gestalten, wodurch sich eine Gewichtsreduzierung gegenüber einer nicht gelochten Ausführung ergibt, ohne daß die Funktion des mehrschaligen Bauteiles beeinträchtigt wird. Siebartig gestaltete Bleche lassen sich auf besonders einfache Weise mit Hilfe u. a. von Stachelwalzen stanzen oder mit Hilfe einer Lasereinrichtung ausformen. Die Löcher können dabei ein beliebiges, regelmäßiges Muster aufweisen und in jeder beliebigen Form gestaltet sein. Wesentlich ist dabei, daß die Lochung sich über die gesamte Fläche der Teilschale erstreckt, da die Teilschale je einen Zuschnitt aus der gelochten Blechmaterialbahn darstellt. Als besonders vorteilhaft erweist sich die Verwendung einer gelochten Teilschale bei einem mehrschaligen Bauteil dann, wenn in Teilbereichen des mehrschaligen Bauteils eine Durchlässigkeit gegenüber Gasen oder Flüssigkeiten gewünscht ist. Ferner erweist sich die Verwendung einer gelochten Teilschale bei einem mehrschaligen Bauteil als günstig im Hinblick auf das Verformungsverhalten des mehrschaligen Bauteils im Falle einer plastischen Verformung, insbesondere bei einer Fahrzeugkollision. Dabei ergibt sich zu einem Anfangszeitpunkt der plastischen Verformung ein reduzierter Deformationswiderstand des Bauteils gegenüber der nicht gelochten Ausführung, wodurch eine vergleichmäßigte Deformation erzielt wird. Voraussetzung der erfindungsgemäßen Lösung ist es, daß die Teilschalen kraftübertragend miteinander verbunden sind.

In Ausgestaltung der Erfindung ist die wenigstens eine Teilschale als gelochtes Verstärkungshohlprofil, insbesondere aus Metall, gestaltet. Vorzugsweise Verstärkungshohlprofile aus Metall, die geringe Umformgrade aufweisen, lassen sich gelocht ausführen, da sich bei ausreichender Steifigkeit eine besonders hohe Gewichtsreduzierung erzielen läßt. Die Verstärkungshohlprofile sind offen gestaltet, um die kraftübertragende Zusammenfügung mit wenigstens einer weiteren Teilschale zu ermöglichen.

Weitere Vorteile und Merkmale ergeben sich aus den Unteransprüchen. Nachfolgend sind bevorzugte Ausführungsbeispiele der Erfindung beschrieben und anhand der Zeichnungen dargestellt.
- Fig. 1: zeigt in einer Explosionsdarstellung einen Hauptbodenbereich einer erfindungsgemäßen Karosseriestruktur eines Kraftfahrzeuges mit einem Mitteltunnel und verschiedenen Verstärkungsblechen,
- Fig. 2: in einer Explosionsdarstellung einen Heckbodenbereich der erfindungsgemäßen Karosseriestruktur mit verschiedenen Verstärkungselementen und die
- Fig. 3a bis 3f: in jeweils einer Prinzipskizze mögliche Lochformen und -anordnungen für eine gelochte Teilschale der erfindungsgemäßen Karosseriestruktur.

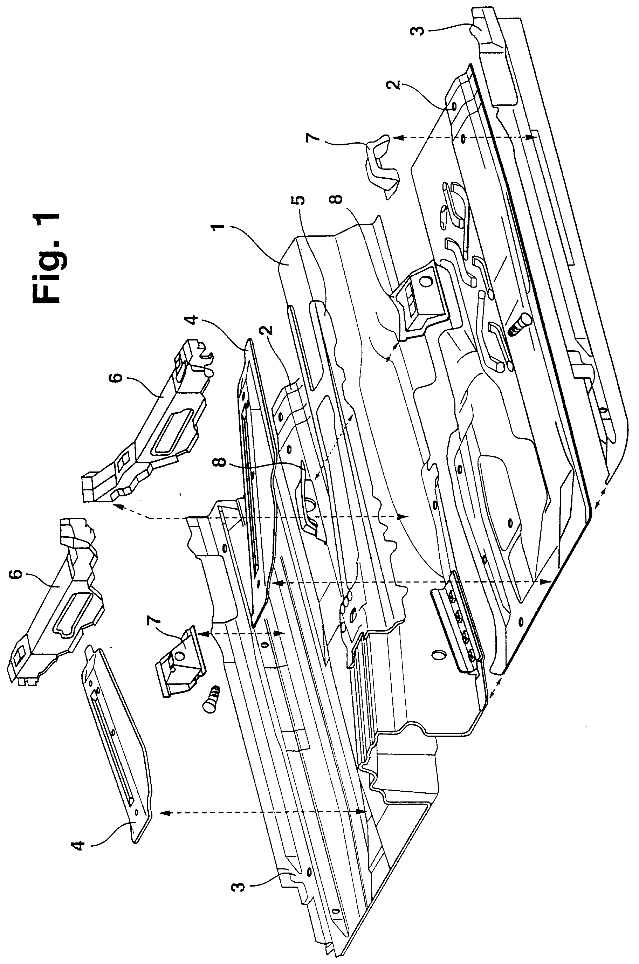

In der Fig. 1 ist ein Hauptbodenbereich eines Personenkraftwagens dargestellt, der zum einen einen Bestandteil des Unterbaus und zum anderen einen unteren Abschluß der Fahrgastzelle des Personenkraftwagens bildet. Er besteht im wesentlichen aus einem Mitteltunnel 1, Bodenblechen 2, Längsträgerelementen 3 und mehreren kraftübertragenden Verstärkungselementen 4 bis 8, die insbesondere Tragfunktionen und/oder Versteifungsfunktionen wahrnehmen.

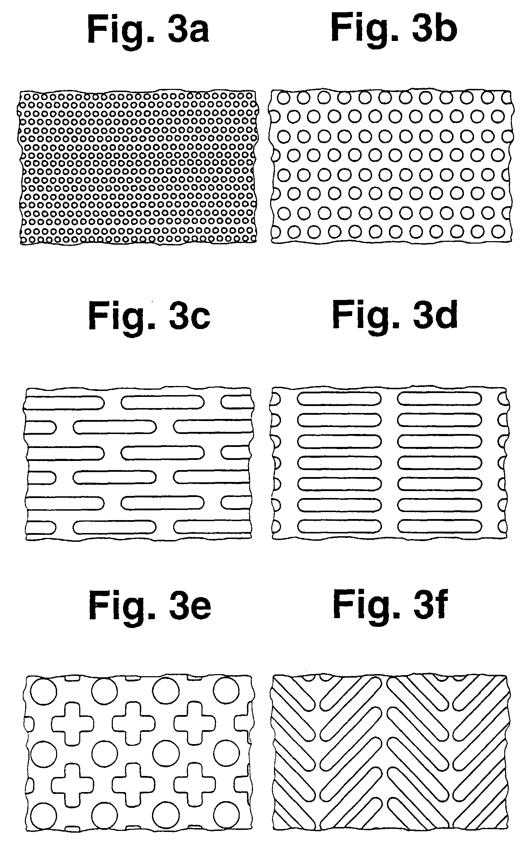

Die Anforderungen an die Oberflächenstruktur der als Blechprofile ausgestalteten Verstärkungselemente 4 bis 8 auf der Innenseite des Hauptbodenbereichs sind gering, da sie von Elementen einer Fahrzeuginnenverkleidung abdeckbar sind. Als Verstärkungselemente sind insbesondere eine Tunnelverstärkung 5, zwei Querträgerprofile 6, äußere Konsolen 7 und innere Konsolen 8 vorgesehen. Die genannten Verstärkungselemente sind entweder selbst mehrschalig gestaltet oder als eine Teilschale Bestandteil eines mehrschaligen kraftübertragenden Bauteils und weisen einen geringen Umformgrad auf. Sie sind je nach Festigkeitsanforderungen aus unterschiedlich gestalteten Lochblechhalbzeugen hergestellt. Mögliche Ausführungsformen der genannten Lochblechhalbzeuge sind aus den Fig. 3a bis 3f zu entnehmen, in denen exemplarisch verschiedene Lochanordnungen und -formen dargestellt sind.

Die Verwendung derartiger Lochbleche dient in erster Linie der Gewichtsreduzierung, bewirkt jedoch auch ein verbessertes Verformungsverhalten, da die Verstärkungselemente bei einer Deformation in Folge einer Fahrzeugkollision ein gleichmäßigeres Verformungsverhalten zeigen. Insbesondere sind Kraft- und Spannungsspitzen in der Anfangsphase eines Verformungsvorgangs nicht so stark ausgeprägt wie bei ungelochten Verstärkungselementen.

Der Abstand der Löcher zueinander, d.h. die Lochanordnung bzw. -verteilung, die Abmessungen und die Orientierung der Löcher (bei unrunden Löchern) richten sich nach dem Umformgrad sowie der Einsatzbelastung des jeweiligen Bauteils. Grundsätzlich bevorzugt ist die Verwendung von Blechen aus Stahl oder Aluminium mit runden Löchern, deren Durchmesser in der Größenordnung der Blechdicke liegt (vgl. Fig. 3a und 3b). Der Abstand der Löcher zueinander soll dabei in einer Größenordnung von ein bis zwei Blechdicken liegen. Eine des weiteren bevorzugte Verwendung von Lochblechen gemäß den Fig. 3c, 3d und 3f sieht Langlöcher mit einer Breite vor, die ebenfalls in der Größenordnung der Blechdicke liegt. Gemäß Fig. 3e ist auch eine Verwendung beliebiger anderer Lochformen und eine Kombination unterschiedlicher Lochformen und -größen möglich.

In einem modifizierten Ausführungsbeispiel dienen die als Hohlprofile ausgestalteten Querträgerprofile 6 zusätzlich als Luftführungskanal der Klimaanlage des Personenkraftwagens. Sie sind aus einem Lochblech hergestellt, so daß von der Klimaanlage geförderte Klimaluft durch das Querträgerprofil 6 hindurchströmen kann. Zur gezielten Luftführung ist dabei eine wenigstens teilweise luftdichte Verblendung der Querträgerprofile 6 vorgesehen. Lochverteilung und -dimensionierung richten sich in diesem Fall insbesondere auch nach dem gewünschten Luftdurchsatz.

In einem weiteren modifizierten Ausführungsbeispiel sind an aus einem Lochblechhalbzeug hergestellten Verstärkungselementen Klebverbindungen angebracht, bei denen der Klebstoff in eines oder mehrere Löcher eingreift und so zusätzlich eine formschlüssige Fixierung gewährleistet.

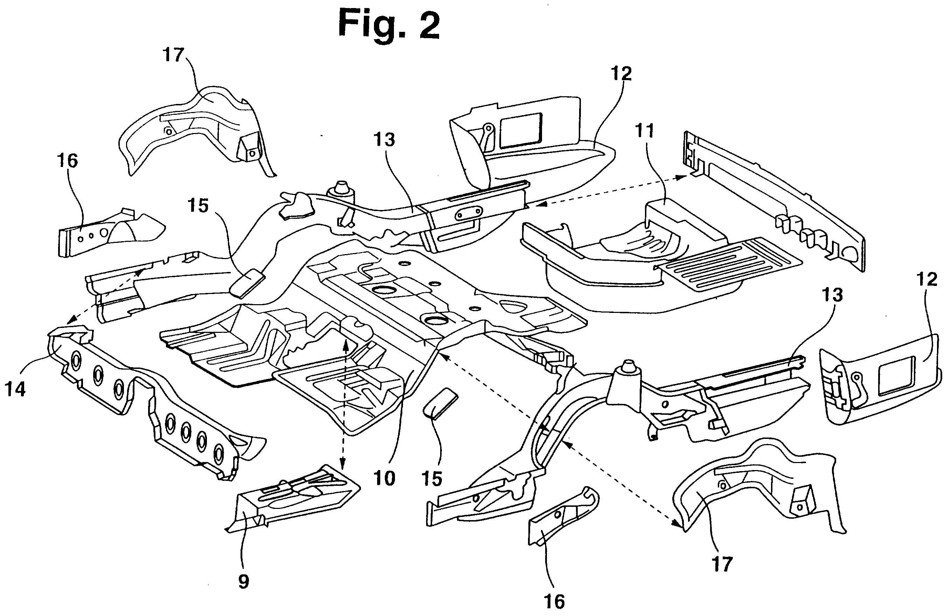

Als weiteres Ausführungsbeispiel der erfindungsgemäßen Karosseriestruktur ist in Fig. 2 ein Heckbodenbereich eines Personenkraftwagens in einer Explosionsdarstellung gezeigt. Er ist wie der Hauptbodenbereich gemäß Fig. 1 Bestandteil des Unterbaus eines Personenkraftwagens. Hauptbestandteile des Heckbodenbereichs sind mehrere Bodenteile 9, 10, 11 sowie Längsträger 13 und Seitenteile 12. Zur Verstärkung des Heckbodenbereichs ist zum einen ein sich über die gesamte Breite der Karosseriestruktur erstreckender, als mehrschaliges Bauteil ausgeführter Querträger 14 vorgesehen. Wenigstens eine Schale dieses Querträgers 14 ist aus einem Lochblechhalbzeug hergestellt. Zum anderen sind mehrere Verstärkungsprofile 15, 16, 17 als ergänzende Teilschalen auf die Längsträger 13 aufgesetzt und mit diesen verbunden. Dabei können insbesondere die Schließteile 17 als innenliegende Bestandteile der Fahrzeugseitenwand gestaltet sein.

## Patentansprüche

1. Karosseriestruktur für ein Kraftfahrzeug mit mehreren fest zusammengefügten, kraftübertragenden Bauteilen, von denen wenigstens eines mehrschalig ausgeführt ist,
**dadurch gekennzeichnet,**
daß wenigstens eine Teilschale (5, 16) des mehrschaligen Bauteiles (1, 13) aus einem siebartig gestalteten Blech geformt ist, das Löcher mit einer Erstreckung von etwa einer Blechdicke aufweist.

2. Karosseriestruktur nach Anspruch 1,
**dadurch gekennzeichnet,**
daß die wenigstens eine Teilschale (5, 16) als gelochtes Verstärkungshohlprofil, insbesondere aus Metall, gestaltet ist.

3. Karosseriestruktur nach einem der Ansprüche 1 oder 2,
**dadurch gekennzeichnet,**
daß die Löcher des siebartig gestalteten Bleches in einem Abstand von etwa ein bis zwei Blechdicken zueinander angeordnet sind.

4. Karosseriestruktur nach einem der Ansprüche 1 bis 3,
**dadurch gekennzeichnet,**
daß als mehrschaliges Bauteil ein Abschnitt eines Kraftfahrzeugmitteltunnels (1) und/oder ein Abschnitt (17) einer Kraftfahrzeugseitenwand und/oder ein Karosserielängsträger (13) und/oder ein Karosseriequerträger (6, 14) vorgesehen sind.

5. Karosseriestruktur nach einem der Ansprüche 1 bis 4,
**dadurch gekennzeichnet,**
daß das mehrschalige Bauteil ein aus einem Lochblech hergestelltes Hohlprofil aufweist, das als Luftführungskanal gestaltet ist.

6. Karosseriestruktur nach Anspruch 5,
**dadurch gekennzeichnet,**
daß das Hohlprofil eine wenigstens teilweise luftdichte Verblendung aufweist.
